# DEMANDE DE BREVET EUROPEEN

(11) **EP 1 034 907 A1**
(43) Date de publication de la demande: **13.09.2000**
(21) Numéro de dépôt: 00400663.1
(22) Date de dépôt: 10.03.2000
(51) Int. Cl.: B29C 33/40, B29C 33/20, A23G 3/02

(54) **Procédé de moulage de produits à durcissement thermique, composition d'élastomere vulcanisable, moules et pince de moulage pour sa mise en oeuvre**

(30) Priorité: 10.03.1999 FR 9903494
(71) Demandeur: Le Moule Alimentaire European, 37300 Joue-les-Tours (FR)
(72) Inventeur: Combes, Frédéric Gaston François, 37300 Joue Les Tours (FR); Olivier, Patrice Claude Louis, 41400 Montrichard (FR)
(74) Mandataire: Thibon-Littaye, Annick

(57) **Abrégé**

L'invention a pour objet un procédé de réalisation d'articles en forme à partir de produits sous forme liquide ou pâteuse à durcissement thermique, notamment de moules culinaires pour la cuisson d'aliments, caractérisé en ce que l'on réalise un moulage dans un moule flexible en matière élastomère vulcanisable à base de silicone comportant une charge d'au moins 25 % en masse d'aluminium sous forme de poudre intimement noyée dans la matière élastomère de manière à assurer une bonne conductibilité thermique sans pour autant créer une conductivité électrique. L'invention concerne également une composition d'élastomère vulcanisable pour la fabrication de moules flexibles.

## Description

La présente invention concerne les techniques de moulage, avec une préférence pour celles qui s'appliquent à la mise en oeuvre de produits sous forme liquide ou pâteuse qui demandent à être durcis thermiquement, par refroidissement ou par chauffage.

Ses applications sont multiples, mais elles concernent principalement les fabrications industrielles du domaine agro-alimentaire, de la pharmacie ou de la cosmétologie. Elles s'étendent toutefois à toute industrie mettant en oeuvre des produits à durcir par cuisson ou des produits qui sont faciles à ramollir par chauffage sans les dénaturer.

Les techniques utilisées à ce jour sont souvent différentes d'un domaine à l'autre, mais, dans tous les cas, les moules les plus courants sont des moules métalliques auxquels on attribue l'avantage d'être à la fois indéformables et de bonne conductibilité thermique. Il est vrai qu'ils sont également peu coûteux quand le volume à mouler n'a pas besoin d'être fermé et que sa forme est assez simple pour être obtenue par estampage d'un feuillard métallique. Leur prix de revient s'augmente toutefois quand il est nécessaire de les recouvrir d'un revêtement facilitant le démoulage, tel que les couches à base de polyesters fluorés ou de silicones que l'on ajoute à des récipients pour la cuisine et la pâtisserie.

Si l'on considère les applications privilégiées de l'invention, qui concernent le domaine culinaire, et donc les moules servant essentiellement à la cuisson d'aliments, il est souhaitable de permettre à la ménagère d'effectuer un chauffage dans un four à micro-ondes, ce qui n'est évidemment pas possible avec des moules métalliques et nécessite que la composition du moule ne présente pas de conductivité électrique, à tout le moins dans le domaine des ultra-hautes fréquences.

Pour des applications différentes, l'art antérieur en matière de moulage connaît aussi des moules à base de matières plastiques rigides, choisies pour leurs propriétés fortement diélectriques. On peut citer notamment le document de brevet européen EP 0 011 538 et le document de brevet français FR 2 715 407, qui concernent l'un et l'autre un moule dans lequel la matière plastique de base est un élastomère, plus précisément une résine de silicone. Le second de ces documents d'art antérieur a d'ailleurs l'intérêt ici de décrire avec tous détails appropriés les différents constituants qui interviennent dans une composition à base de silicones (polysiloxanes), ainsi que les conditions de son durcissement par polymérisation, plus exactement par polyaddition et réticulation. En effet, l'invention prévoit, comme on le verra plus loin, d'utiliser de préférence ce genre de résine en tant que constituant élastomère.

Toutefois, dans les deux cas, le moule est spécifiquement destiné à la mise en forme d'objets dont la composition est par elle-même durcissable sous l'effet d'un rayonnement à haute fréquence. On relèvera que ceci n'est pas en soi un objectif approprié pour un moule culinaire, fut-il réservé à une cuisson dans un four à micro-ondes. D'autre part, en ce qui concerne le document de brevet français FR 2 745 407, s'il est préconisé d'ajouter des charges à la composition des moules, en visant par là à augmenter la dureté de la composition durcie, ces charges ne sont jamais que des oxydes céramiques, donc des matières isolantes. Quant au moule faisant l'objet du document de brevet européen EP 0 011 538, il est fort complexe, ce qui représente un handicap indéniable sur le plan industriel et économique. Il comporte une série de couches, dont les propriétés, et donc la nature, doivent être différentes, avec notamment des couches électriquement conductrices et des couches isolantes d'élastomère. Il prévoit en particulier une couche fine de résine de silicone pure, formant une membrane détachable du fait de ses propriétés de non-adhérence, et une couche épaisse et non déformable contenant une charge suffisante d'aluminium pour être électriquement conductrice.

Par rapport à cet antérieur, l'invention vise notamment à mieux satisfaire, simultanément, à des impératifs industriels qui ressortent a priori contradictoires, et en particulier, à concilier les exigences de démoulabilité, conductibilité thermique, propriétés diélectriques, que l'on doit respecter pour satisfaire aux besoins des moules pour utilisation culinaire, qu'ils soient destinés aux ménagères dans un contexte domestique, ou aux cuisines collectives relevant d'entreprises industrielles.

Pour cela, l'invention prévoit, entre autres caractéristiques, de constituer les moules, tels que des moules de cuisson d'aliments, en une matière unique dont la composition est à base d'élastomère, notamment d'une résine de silicone, dont on met ainsi à profit les qualités d'anti-adhérence pour faciliter le démoulage. Elle prévoit aussi l'adjonction de charges adaptées, permettant d'améliorer la conductibilité thermique pour la cuisson au four thermique, ou le cas échéant pour un traitement procédant au contraire par refroidissement, sans que les moules durcis obtenus présentent pour autant une conductivité électrique non négligeable qui interdirait l'utilisation du chauffage par micro-ondes. En outre, en fonction également de la forme donnée aux moules, l'invention permet d'atteindre un compromis avantageux entre les propriétés de rigidité, dureté, souplesse, flexibilité, d'où il résulte à la fois la préservation des formes à mouler et une déformabilité élastique des moules qui peut être fort utile, par exemple lors du démoulage.

L'invention permet ainsi notamment de réaliser des gâteaux ou biscuits en assurant la cuisson de la pâte dans de tels moules, en opérant le plus souvent au four thermique traditionnel, mais aussi y compris, le cas échéant, en utilisant un four de chauffage par micro-ondes, cette notion désignant, de façon couramment admise, les dispositifs générant des ondes électromagnétiques à ultra-haute fréquence. Dans tous les cas, le produit cuit peut se refroidir rapidement à travers les parois du moule, et si besoin, le même moule peut servir pour le réchauffer au four à micro-ondes.

A cette fin, l'invention a pour objet un procédé de réalisation d'articles en forme à partir de produits sous forme liquide ou pâteuse à durcissement thermique, caractérisé en ce que l'on réalise le durcissement dans un moule flexible en une composition d'élastomère vulcanisable à base de silicones comportant une charge d'au moins 25 % et au plus 60 % en masse d'aluminium, sous forme de poudre intimement noyée dans la matière élastomère, de manière à assurer une bonne conductibilité thermique sans pour autant créer une conductivité électrique.

L'aluminium est un métal léger, de faible prix et bon conducteur de la chaleur, et il permet donc d'obtenir une bonne conductibilité thermique à un faible coût. Il est avantageusement incorporé dans la composition à base de silicones en mélange avec d'autres charges minérales pulvérulentes qui améliorent le comportement mécanique de la matière polymérisée. Il s'agit en particulier de microbilles de verre. Ce composant a le double intérêt de constituer un isolant électrique par rapport à l'aluminium et d'améliorer la coulabilité de la composition avant durcissement. Il semble en outre qu'il apporte un effet synergique vers l'obtention de la conductibilité thermique assurée par des particules d'aluminium qui restent individuellement enrobées par de l'élastomère de silicones à fonction d'isolant électrique.

Selon un mode de réalisation de l'invention, pour les produits à durcissement par refroidissement, dans le cas de moules fermés à deux demi-coquilles, on dispose les moules les uns à côté des autres selon des lignes parallèles au plan de jonction des deux demi-coquilles, on serre chaque ligne de moules dans une pince, on verse le produit liquide ou pâteux chaud dans les moules et on réalise un refroidissement par circulation d'air.

Ceci permet la réalisation d'articles moulés en série de manière semi-automatique.

L'invention a également pour objet une composition d'élastomère vulcanisable pour la fabrication de moules flexibles, convenant à la mise en oeuvre du procédé précité, caractérisée en ce qu'elle comprend :
- un mélange durcissant par polymérisation de silicones compatibles du genre des polydialkylsiloxanes, comprenant de 50 à 60 % en masse d'un premier polydiméthylsiloxane ou équivalent et de 5 à 6 % en masse d'un second polydiméthylsiloxane ou équivalent, ainsi de préférence que de 1,5 à 4 % en masse d'une huile à fonction fluidifiante,
- et une charge minérale comprenant au moins de 25 à 60 % en masse de poudre d'aluminium, mais de préférence aussi de 4 à 7 % en masse de microbilles de verre.

De préférence encore, la composition comporte en outre, en constituant de la charge minérale, donc toujours sous forme pulvérulente, de 0,5 à 7 % en masse d'oxyde de fer et/ou de silicate de calcium. Suivant des exemples préférés de mis en oeuvre de l'invention, il s'agit ici de faire comporter à la composition des moules de l'oxyde de fer dans la proportion de 0,5 % à 2 % et du silicate de calcium dans la proportion de 1 à 5 % en masse.

Toutes ces proportions sont, ici comme dans l'ensemble du présent texte en l'absence d'indications contraires, exprimées en masse par rapport à la masse de la composition globale.

De manière en soi connue, les premier et second polydiméthylsiloxanes sont avantageusement représentés par des prépolymères de silicones copolymérisables avec réticulation, l'un jouant en général le rôle de durcisseur pour l'autre, tels que ceux qui sont connus sous les désignations respectives Elastosyl A et Elastosyl B. De manière connue également, la composition comporte un promoteur de polymérisation et elle peut comporter des réticulants et autres additifs intervenant dans la formation de l'élastomère final. Avantageusement, la proportion en deuxième polydiméthylsiloxane est environ égale à 10 % en masse de celle du premier polydiméthylsiloxane.

D'autres caractéristiques de mise en oeuvre préférées de l'invention concernent les charges minérales introduites dans la composition à base de silicones, comme indiqué ci-après de manière non limitative.

La poudre d'aluminium présente une granulométrie de 45 à 1600 micromètres, avantageusement comprise entre 50 et 100 micromètres. L'oxyde de fer présente une granulométrie comprise entre 0,1 et 0,8 micromètres. Les microbilles présentent un diamètre moyen compris entre 25 et 850 micromètres, et préférentiellement supérieur à 500 micromètres.

Avantageusement la composition d'élastomère vulcanisable comporte :
- 55 % en masse du premier polydiméthylsiloxane,
- 5 % en masse du second polydiméthylsiloxane,
- 30 % à 40 % en masse de poudre d'aluminium,
- de l'ordre de 1 % en masse d'oxyde de fer,
- de l'ordre de 5 % en masse de microbilles de verre, présentant notamment une granulométrie inférieure à 50 µm,
- de l'ordre de 2 % en masse de silicate de calcium,
- de l'ordre de 2 % en masse d'huile de silicones.

L'invention a aussi pour objet des moules flexibles fermés destinés à l'industrie agro-alimentaire ou à l'industrie de la cosmétologie pour la mise en oeuvre du procédé précité, caractérisés en ce que chaque demi-coquille a une épaisseur telle que, sur ses bords, le moule est non déformable en compression tout en conservant sa flexibilité.

Un tout premier avantage de l'invention réside dans la simplicité de réalisation de la composition d'élastomère incorporant une charge dans des proportions inhabituelles conférant à celle-ci des propriétés mécaniques tout à fait admissibles dans ce domaine technique et surtout une conductivité thermique remarquable, sans créer de conductivité électrique notable.

Cette particularité est très appréciable lorsqu'il s'agit de chauffer ou réchauffer rapidement le contenu du moule, ou de le "saisir" en cuisson, puisque la chaleur lui est transmise par un transfert immédiat.

Un autre avantage de la présente invention réside dans l'augmentation de la résistance mécanique à l'écrasement et à l'abrasion des moules ou pièces de moule obtenus à partir de la composition d'élastomère.

Un autre avantage encore de l'invention réside dans la diminution des possibilités de migration des matières grasses et huiles essentielles dans le matériau du moule, alors qu'en pratique, pour les principales applications de l'invention, ces produits gras sont toujours présents dans les préparations que les moules sont destinés à contenir.

D'autres caractéristiques, détails et avantages de l'invention ressortiront plus clairement de la description explicative qui va suivre concernant des modes de réalisation particuliers, laquelle est faite pour partie en référence aux dessins annexés, donnés uniquement à titre d'exemple et dans lesquels :
- la figure 1 représente, en vue dessus, un dispositif pour le moulage semi-automatique d'articles en forme à partir de produits sous forme liquide ou pâteuse à durcissement thermique
- la figure 2 est une vue de profil d'une pince de serrage, et
- la figure 3 représente, en perspective, une demi-coquille d'un moule fermé.

Dans le cadre des techniques de moulage portant sur des produits sous forme liquide ou pâteuse qui demandent à être durcis thermiquement, l'invention est ici décrite dans l'une de ses applications relatives au domaine agro-alimentaire, pour la fabrication d'articles tels que des gâteaux ou biscuits qui sont obtenus à partir d'une pâte dont on provoque la cuisson dans le moule. Dans ce cas, on admet que ces articles sont cuits dans des moules flexibles présentant la composition ci-dessus définie conformément à l'invention qui sont des moules ouverts, en une seule partie, qui déterminent donc la forme et les motifs de l'article fini sur l'une seule de ses deux faces principales opposées.

L'invention est également décrite dans un cas d'application dans l'industrie de la cosmétologie, où l'on réalise les articles à partir d'un produit qui a été ramolli par chauffage et introduit dans un moule où il durcit par refroidissement. Il s'agit en particulier de savons transparents ou analogues. On s'intéresse alors plus spécialement à un moule en deux parties appelées demi-coquilles qui se ferment l'une sur l'autre pour délimiter le volume à remplir par le produit ramolli, ainsi que sa forme et ses motifs sur toutes ses faces.

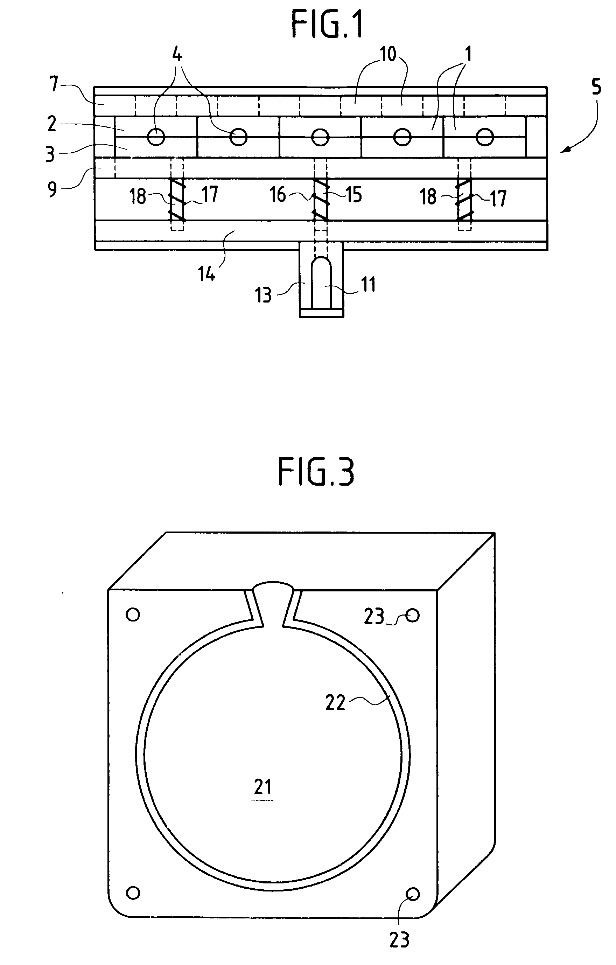

En se référant à la figure 1, on commencera maintenant par décrire le matériel essentiel d'une installation permettant la réalisation de tels articles qui sont durcis par refroidissement.

Le produit qui a été ramolli par chauffage est introduit dans des moules 1 comportant deux demi-coquilles 2 et 3 et une ouverture d'alimentation 4.

Ces moules sont disposés selon une ligne parallèle à la ligne de jonction des deux demi-coquilles 2 et 3 et l'ensemble est placé dans une pince 5 dans laquelle on réalise un serrage appliquant les deux demi-coquilles l'une sur l'autre.

En variante, on peut aussi réaliser des moules fermés multiples correspondant à la ligne de moule de la figure 1, c'est-à-dire qui comportent deux demi-coquilles et cinq ouvertures d'alimentation de manière à permettre la réalisation de cinq articles.

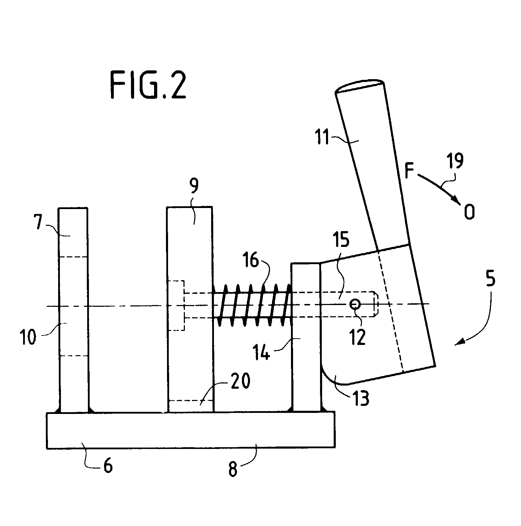

La pince de serrage est représentée en vue de profil sur la figure 2. Elle comporte essentiellement une plaque de serrage 6 en forme de L dont la barre verticale 7 constitue la mâchoire et la barre horizontale 8 la base. Une plaque de serrage mobile 9 parallèle à la mâchoire 7 est montée en translation sur la base 8 selon une direction perpendiculaire au plan de la mâchoire 7.

Le déplacement de la plaque de serrage mobile 9 est commandé par un levier 11 mobile autour d'un axe 12 parallèle aux mâchoires 7 et 9 et qui comporte une partie en forme de came 13 qui coopère avec une plaque verticale 14 fixée sur la base 8 de la plaque de serrage 6. La liaison entre le levier d'actionnement 11 et la plaque de serrage mobile 9 est réalisée au moyen d'un axe 15 qui passe à travers un trou aménagé dans la plaque 14 et dont l'extrémité est solidarisée de la plaque de serrage mobile 9. Un ressort de compression 16 disposé entre la plaque de serrage mobile 9 et la plaque 14 assure le serrage de la pince sur les moules.

Comme on peut le voir sur la figure 1, la pression de serrage est également assurée par deux autres ressorts 17 disposés sur un axe 18 solidaire de la plaque de serrage mobile 9 et coulissant dans un trou de la plaque 14.

Sur la figure 2, le levier d'actionnement 11 est représenté dans la position de fermeture du moule. Pour relâcher la pression exercée sur les deux demi-coquilles et ouvrir la pince, il faut actionner ce levier 11 dans le sens de la flèche 19. La came 13 vient en contact avec la plaque fixe 14 et tire la plaque de serrage mobile 9 vers la plaque fixe 14 en comprimant les ressorts 16 et 17.

L'espace entre la mâchoire fixe 7 et la plaque de serrage mobile est alors supérieur à la largeur des moules ou du moule unique, de sorte que l'on peut facilement mettre ces derniers en place. Ceci fait, on peut refermer la pince. La plaque de serrage mobile est alors pressée sur le ou les moules, la came 13 n'étant plus en contact avec la plaque fixe 14.

Avantageusement, la mâchoire fixe 7 comporte des trous circulaires 10 disposés en regard de chaque moule 1 et la mâchoire mobile 9 comporte un évidement inférieur 20 qui s'étend sur presque toute sa longueur en regard des moules 1. Ceci permet de réaliser une bonne circulation d'air autour des moules 1 et d'accélérer le processus de durcissement par refroidissement.

On pourrait également prévoir des trous analogues aux trous 10 dans la mâchoire mobile 9.

Lorsque les moules sont serrés dans la pince, on commande la descente d'une buse de remplissage en produit liquide ou pâteux chaud. Cette buse est plongée aux deux tiers de la hauteur du moule et remonte ensuite en débitant le produit jusqu'à remplir complètement le moule et son ouverture de remplissage de manière à obtenir dans cette ouverture une carotte qui permettra la manipulation de l'article après démoulage avant d'être finalement découpée.

L'ensemble de la pince et des moules peut alors passer dans un tunnel de froid pour le refroidissement du produit qui peut alors être démoulé.

Le positionnement précis du ou des moules dans la pince et de la pince dans le poste de remplissage pour aligner la buse de remplissage avec l'ouverture de remplissage du moule peut être obtenu au moyen de bossages d'indexation qui sont détectés de manière optique ou mécanique.

Avantageusement on peut prévoir un contacteur actionné par le levier 11 en position de fermeture de la pince qui commande le processus de remplissage des moules, par exemple le mouvement de descente de la buse de remplissage. Cette disposition permet d'obtenir un fonctionnement semi-automatique de l'installation de moulage d'articles.

Il va maintenant être décrit la forme d'un moule utilisé dans le procédé de fabrication d'articles mis en oeuvre au moyen d'une installation telle que celle qui vient d'être décrite, avant de passer à la composition chimique du moule et à sa propre fabrication.

On voit sur la figure 3 une des demi-coquilles 3 du moule 1. Cette demi-coquille 3 comporte un évidement 21, par exemple de forme sphérique, qui est relié à l'ouverture d'alimentation 4 et qui comporte un rebord saillant 22 qui coopère avec un rebord correspondant de l'autre demi-coquille de manière à assurer l'étanchéité du moule lors du serrage. Les tétons 23 coopérant avec des évidements correspondants de l'autre demi-coquille assurent un positionnement précis des deux demi-coquilles l'une sur l'autre.

L'épaisseur de cette demi-coquille 3 est telle, que compte tenu de la composition dans laquelle est réalisé le moule, ce par assemblage des deux demi-coquilles, ce moule n'est pas déformable en compression dans la région de ses bords, dans le sens perpendiculaire à la surface de jonction des deux demi-coquilles. De cette manière, lorsqu'il est serré dans la pince 5, le moule 1 n'est pas déformé dans le sens de son épaisseur. Toutefois, chaque demi-coquille conserve séparément une flexibilité suffisante pour assurer un démoulage aisé.

Les moules suivant l'invention, tels qu'ils viennent d'être décrits, dans leur constitution et dans leur mise en oeuvre industrielle, sont réalisés en une composition élastomère vulcanisable qui permet d'obtenir les propriétés citées ci-dessus, à savoir notamment : une bonne conductibilité thermique, une faible conductivité électrique, une bonne résistance à la compression transversale, une flexibilité importante.

La composition suivant l'invention, telle que choisie en mode de réalisation particulier, est la même qu'il s'agisse d'un moule ouvert en une seule pièce ou d'un moule fermé comportant deux demi-coquilles complémentaires comme il vient d'être décrit. Pour ce qui est en soi connu, elle est essentiellement à base de deux polymères ou prépolymères constitués par des composés polyorganosiloxanes, plus précisément du type polyalkylsiloxanes, et plus précisément encore par des polydiméthyl-siloxanes, présentant des formules à groupements coopérants dans la formation de copolymères par polyaddition.

Comme indiqué précédemment, la composition d'élastomère comporte d'autre part une forte proportion d'une charge constituée d'éléments pulvérulents de nature minérale, à savoir principalement de poudre d'aluminium en majeure partie et de microbilles de verre en mineure partie. Elle comporte aussi, en constituant liquide une huile dont le rôle vient se conjuguer avec celui des microbilles de verre pour favoriser fluidifier la composition non encore durcie. De la sorte, la charge pulvérulente, de dimensions microniques, peut représenter jusqu'à 60 % de la masse totale de la composition, sans que pour autant la mise en forme de ces compositions par moulage devienne impossible. La composition suivant l'invention se traduit au contraire par un mélange coulable dans une préforme de moulage et utilisable de manière classique dans les opérations de moulage, la viscosité de la composition globale restant par exemple de l'ordre de 25000 cPo.

Parmi les constituants essentiels de la composition de l'invention, le rôle de la poudre d'aluminium est d'augmenter la conductibilité thermique du moule obtenu, d'une manière qui est ici particulièrement significative, grâce à un effet synergique avec les autres éléments de la composition qui permet d'impliquer dans cette conductibilité une proportion en pourcentage de la composition globale dont l'importance ne pouvait être envisagée par l'homme de l'art. Au total, la matière durcie répondant à la composition suivant l'invention confère aux moules qui en sont constitués une capacité de transfert thermique à travers les parois qui est grandement améliorée.

Une autre propriété de la composition à base de silicones est également améliorée de façon inattendue. Il s'agit de la résistance mécanique à l'écrasement et à l'abrasion. Les essais effectués ont montré qu'un moule obtenu à partir de la composition selon l'invention présentait des propriétés tout à fait remarquables, permettant d'accroître la durée d'utilisation de ces moules.

Un autre problème rencontré fréquemment avec des moules en élastomères de silicones réside dans le phénomène de la migration des matières grasses et des huiles essentielles au sein de la matière à base de silicones, ce qui n'est pas admissible. De ce point de vue, on a découvert selon l'invention que l'addition d'oxyde de fer et/ou de silicate de calcium, avantageusement dans des proportions respectives de 0,5 à 2 % et de 1 à 5 %, en masse par rapport à la masse de la composition totale, permet de saturer la capacité d'absorption de l'élastomère et, de la sorte, de réduire à quasiment néant les possibilités de migration de ces matières.

En outre, on a pu observer que la charge pulvérulente incorporée dans la composition a un effet bénéfique sur la matière une fois durcie, qui tend à la libérer des charges électrostatiques que l'on reproche habituellement aux silicones. Il semble que cet effet de déchargement d'électricité statique soit essentiellement dû à la charge d'aluminium, qui tout en étant sous une structure discontinue où chaque particule est enrobée d'une fine couche de silicone isolante, reste capable de certains contacts électriques à l'échelle moléculaires. Il est remarquable qu'il se manifeste alors même que la conductibilité électrique ne montre aucune augmentation sensible quand on fait varier la proportion d'aluminium dans la gamme préconisée en conformité avec l'invention.

Les polydiméthylsiloxanes utilisés dans la composition selon l'invention correspondent à des élastomères de silicones vulcanisant par addition à température ambiante ou à des caoutchoucs de silicones vulcanisables à température ambiante (RTV).

Le premier polydiméthylsiloxane est utilisé dans une proportion comprise entre environ 50 et 60 % en masse par rapport à la composition totale et plus particulièrement une proportion de 54 à 57 %. On utilise en particulier un composé du commerce vendu sous la désignation "Elastosyl A". Le second polydiméthylsiloxane est utilisé dans une proportion comprise entre environ 4 et 7 % en masse par rapport à la composition totale et correspondant de préférence à environ le dixième de la proportion du premier polydiméthylsiloxane. Une valeur de l'ordre de 5 % est apparue particulièrement bien adaptée, notamment dans la situation où l'on utilise un composé du commerce vendu sous la désignation "Elastosyl B" et préconisé en association avec le premier par le même fournisseur.

La poudre d'aluminium utilisée est une poudre micronisée du commerce, présentant une granulométrie de l'ordre de 45 à 1600 µm, présente en une proportion de 25 à 50 % en masse par rapport à la composition totale. Le pourcentage de poudre d'aluminium utilisé est en liaison avec sa granulométrie. Une granulométrie comprise entre 45 et 1600 µm, par exemple 63 µm, permet d'incorporer sans difficulté 30 à 40 % en masse de poudre d'aluminium dans la composition. On obtient ainsi des moules ayant une texture homogène.

A titre d'exemple, on a préparé une composition d'élastomère vulcanisable comportant :
- 55 % de silicone "Elastosyl A",
- 5 % de silicone "Elastosyl B",
- 30 % de poudre d'aluminium présentant une granulométrie de 63 µm,
- 1 % d'oxyde de fer,
- 5 % de microbilles de verre présentant une granulométrie inférieure à 50 µm,
- 2 % de silicate de calcium,
- 2 % d'huile de silicones.

La composition est préparée de la manière décrite ci-après, dans une mise en oeuvre qui peut être soit continue, soit par fractions successives.

En continu, on introduit dans un mélangeur la poudre d'aluminium, l'oxyde de fer et les microbilles de verre. Après mélange, on rajoute le premier silicone, puis l'huile. On peut s'assurer du mélange parfait de ces composés par une observation visuelle. On rajoute ensuite le second silicone, puis l'on procède à un dégazage du mélangeur grâce à une pompe à vide.

Après dégazage, on réalise une coulée par simple gravité dans la préforme de moulage servant à fabriquer les moules (ou les parties de moule si celui-ci est constitué par assemblage de plusieurs pièces). La préforme est réalisée par exemple en aluminium ou en résine de polyuréthanes. Elle peut être constituée en une matière élastomère à base de résines de silicones et/ou chargée en aluminium, le cas échéant en une matière présentant la composition préconisée par ailleurs par l'invention.

On soumet les moules (ou parties de moule) ainsi mis en forme à un étuvage à une température de l'ordre de 100 à 150 °C pour réaliser la vulcanisation. On procède enfin au démoulage des moules ou parties de moule.

Cela conduit à des moules de couleur gris lie de vin ayant une dureté Shore de 45, résistant bien à la compression, et présentant une conductivité thermique deux à trois fois supérieure à celle du silicone de base (passant de 0,16 W/m/°K à 0,41 W/m/°K pour 40 % d'aluminium). On obtient des moules de grande rigidité, ce qui assure la stabilité dimensionnelle et la résistance mécanique, qui néanmoins conservent une bonne souplesse, au point qu'ils sont flexibles par déformation élastique là où leur épaisseur de paroi est faible. En pratique, dans leur partie en forme pour le moulage d'articles, ces moules peuvent avoir une très faible épaisseur, de 2 ou 3 mm par exemple, tout en possédant une grande rigidité.

A partir de la même composition de matière et du même mode de fabrication et de présentation, ils peuvent être utilisés pour le moulage de divers produits. On admet ici qu'il s'agit principalement de produits alimentaires pour les moules ouverts ou de produit de l'industrie des cosmétiques pour les moules en deux parties. Toutefois, ces applications particulières n'ont rien de limitatif, étant entendu, par exemple, que l'invention trouve également application dans la fabrication des comprimés pharmaceutiques et de toutes sortes d'articles moulés, ce toujours avec une préférence pour ceux dont le moulage implique une opération de chauffage ou de refroidissement pour assurer le durcissement du produit mis en forme dans les moules.

Les moules selon l'invention sont utilisables notamment dans les secteurs de la pâtisserie (madeleines, sablés, etc. ), de la confiserie (caramel, gélifiés et sucre cuit, etc. ), de la charcuterie ou salaison, des produits traiteurs et dérivés (mousse de foie, pâtés divers, etc. ) des sauces (préparations congelées), des produits laitiers (fromages, beurres, etc. ), des cosmétiques (savons transparents, rouges à lèvres, etc. ), de la ciergerie (bougies).

Les exemples d'applications ci-dessus illustrent bien comment l'invention permet d'atteindre les buts qu'elle s'est fixés. Les articles moulés obtenus peuvent reproduire un motif ou un logo présentant des détails très fins, de l'ordre du micromètre. Parmi les multiples situations qui en tirent profit, on peut citer des mottes de beurre dont la surface comporte des représentations de monuments très fines et en relief.

## Revendications

1. Moule flexible pour la réalisation d'articles en forme à partir de produits sous forme liquide ou pâteuse à durcissement thermique, caractérisé par une composition essentiellement constituée par un mélange vulcanisable à base d'élastomère de silicone additionné d'une charge minérale pulvérulente comportant, dans une proportion de 25 % à 60 % en masse par rapport à la masse de la composition totale, de l'aluminium sous forme de poudre intimement noyée dans la matière élastomère vulcanisée de manière à assurer une bonne conductibilité thermique sans pour autant créer une conductivité électrique.

2. Composition de moules flexibles suivant la revendication 1, caractérisée en ce qu'elle comprend de 50 à 60 % en masse d'un premier polydiméthylsiloxane, de 5 à 6 % en masse d'un second polydiméthylsiloxane, de 1,5 à 4 % en masse d'une huile fluidifiante, de 25 à 60 % en masse de poudre d'aluminium micronisée, et de 4 à 7 % en masse de microbilles de verre, toutes ces proportions étant exprimées par rapport à la masse de la composition globale.

3. Composition selon la revendication 3, caractérisée en ce que la poudre d'aluminium présente une granulométrie de 45 à 1600 micromètres, notamment une granulométrie de 50 à 100 micromètres.

4. Composition selon la revendication 2 ou 3, caractérisée en ce qu'elle comporte en outre de 0,5 à 2 % en masse d'oxyde de fer et/ou de 1 à 5 % en masse de silicate de calcium, par rapport à la masse de la composition globale.

5. Composition selon la revendication 2, 3, ou 4, caractérisée en ce que les microbilles de verre présentent un diamètre moyen compris entre 25 et 850 micromètres, et préférentiellement inférieur à 500 micromètres.

6. Procédé de réalisation d'articles en forme à partir de produits sous forme liquide ou pâteuse à durcissement thermique, caractérisé en ce que l'on réalise un moulage dudit article dans un moule flexible (1) répondant à la composition de l'une quelconque des revendications 2 à 5.

7. Procédé selon la revendication 6, caractérisé en ce que, pour les produits à durcissement par refroidissement, dans le cas de moules fermés à deux demi-coquilles (2,3), on dispose les moules (1) les uns à côté des autres selon des lignes parallèles au plan de jonction des deux demi-coquilles (2,3), on serre chaque ligne de moules dans une pince (5), on verse le produit liquide ou pâteux chaud dans les moules (1) et on réalise un refroidissement par circulation d'air.

8. Procédé suivant la revendication 7, caractérisé en ce que chaque demi-coquille (2,3) a une épaisseur telle que, sur ses bords, le moule est non déformable en compression tout en conservant sa flexibilité.

9. Pince (5) pour la mise en oeuvre du procédé selon la revendication 6, caractérisée en ce qu'elle comporte une plaque de serrage fixe (6) en forme de L et une plaque de serrage (9) mobile en translation sur la base (8) dudit L sous l'action d'un levier de commande, en ce que la plaque de serrage fixe (7) comporte, au regard de chaque partie centrale des moules (1), un trou (10) et en ce que la plaque mobile (9) comporte un évidement inférieur (20) de circulation d'air.

10. Pince selon la revendication 10, caractérisée en ce qu'elle comporte un contacteur actionné lors de la fermeture de la pince et commandant le processus de remplissage des moules.
